(19) Europäisches Patentamt
European Patent Office
Office européen des brevets

(11) **EP 4 131 084 A1**

(12) **EUROPEAN PATENT APPLICATION**

(43) Date of publication:
**08.02.2023 Bulletin 2023/06**

(21) Application number: **22170237.6**

(22) Date of filing: **27.04.2022**

(51) International Patent Classification (IPC):
**G06N 7/00** *(2000.01)*          **G06N 5/00** *(2000.01)*

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 JP 2021130152**

(71) Applicant: **FUJITSU LIMITED**
**Kawasaki-shi, Kanagawa 211-8588 (JP)**

(72) Inventor: **PARIZY, Matthieu**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **PROGRAM, DATA PROCESSING METHOD, AND DATA PROCESSING APPARATUS**

(57)    A program in which a computer performs processing of reading a plurality of first solutions of an optimization problem represented by a combination of values of a plurality of state variables, converting the plurality of first solutions into a plurality of second solutions represented by a first number of variables smaller than a number of the plurality of state variables, determining a region that indicates a spread of the plurality of second solutions in a solution space that includes a dimension of the first number, generating a third solution located at a second position outside the region and away from a first position within the region by a first distance, converting the third solution into a fourth solution that consists of the plurality of state variables, and searching for a solution of the optimization problem by using the fourth solution as an initial value of the plurality of state variables.

FIG. 1

**Description**

[Field]

The embodiments discussed herein are related to a program, a data processing method, and a data processing apparatus.

[Background Art]

As an apparatus that calculates a large-scale discrete optimization problem (such as a combinatorial optimization problem) which a Neumann-type computer is not good at, there is an Ising apparatus (also referred to as a Boltzmann machine) using an Ising-type evaluation function (also referred to as an energy function or the like).

The Ising apparatus converts a discrete optimization problem into an Ising model representing a behavior of spin of a magnetic body. The Ising apparatus searches for a state of the Ising model in which the value of an Ising-type evaluation function (equivalent to energy) is local minimum by a Markov chain Monte Carlo method such as the simulated annealing method or the replica exchange method. A state in which the value of an evaluation function is the minimum value among local minimum values, is the optimal solution. By changing the sign of the evaluation function, the Ising apparatus may also search for a state in which the value of the evaluation function is local maximum. A state of an Ising model may be expressed by a combination of the values of a plurality of state variables. As the value of each state variable, 0 or 1 may be used.

For example, an Ising-type evaluation function is defined by a function of a quadratic form of the following equation (1).

[Equation 1]

$$E = -\sum_{<i,j>} W_{ij} x_i x_j - \sum_i b_i x_i \qquad (1)$$

The first term on the right side adds up the products of the values of two state variables and a weight value (representing the degree of interaction between the two state variables) without omission and duplication for all combinations of all state variables included in the Ising-type evaluation function. $x_i$ is a state variable with an identification number i, $x_j$ is a state variable with an identification number j, and $W_{ij}$ is a weight value indicating the degree of interaction between the state variables with the identification numbers i and j. The second term on the right side calculates a sum of the products of a bias coefficient and a state variable for each identification number. $b_i$ indicates a bias coefficient for the identification number = i.

An energy change amount ($\Delta E_i$) when the value of $x_i$ changes is represented by the following equation (2).

[Equation 2]

$$\Delta E_i = -\Delta x_i \left( \sum_j W_{ij} x_j + b_i \right) = -\Delta x_i h_i \qquad (2)$$

In equation (2), for example, $\Delta x_i$ is -1 when $x_i$, which takes a value of 0 or 1, changes from 1 to 0, whereas $\Delta x_i$ is 1 when $x_i$ changes from 0 to 1. $h_i$ is referred to as a local field, and $\Delta E_i$ is a product of $h_i$ and a sign (+1 or -1) depending on $\Delta x_i$.

For example, in a case where $\Delta E_i$ is smaller than a noise value obtained based on a random number and a value of temperature parameter, processing of updating the value of $x_i$ to generate a state transition and updating the local field is repeated.

Incidentally, in the Ising apparatus of the related art, in a case where the initial value of all state variables (initial solution) is not appropriate, there is a possibility that calculation time increases since a solution is constrained to a local solution that is not the optimal solution, or for other reasons.

In the related art, there has been a method in which, when calculating a combinatorial optimization problem, an initial value is randomly changed and the calculation is repeated using the changed initial value.

In the related art, there has been a method in which principal component analysis (PCA) is performed in order to analyze point cloud data (for example, PTL 1).

In the related art, there has been a method in which, when randomly searching for and obtaining a solution of a discrete optimization problem, a low-order neighborhood search is intensively performed in a case where there is a high possibility that a large number of improved solutions exist in the vicinity of a current solution, and wide area search is performed in a case where the possibility is low (for example, PTL 2).

There has been a method in which, when calculating a solution of a combinatorial optimization problem, solutions as many as the number of solutions capable of evaluation are uniformly extracted using a binary search tree in order to efficiently search a wide solution space with a large degree of deviation that is a distance between states unique to the problem(for example, PTL 3).

[Citation List]

[Patent Literature]

[PTL 1] Japanese Laid-open Patent Publication No. 2018-141759.
[PTL 2] Japanese Laid-open Patent Publication No. 2001-117773.
[PTL 3] Japanese Laid-open Patent Publication No. 2019-46031.

[Non-Patent Literature]

[NPL 1] Christian Blum and Andrea Roli, "Metaheuristics in combinatorial optimization: Overview and conceptual comparison", ACM Computing Surveys, Vol. 35, Issue 3, pp. 268-308, September 2003.

[Summary]

[Problem]

In the method of randomly changing an initial value in the related art, in most cases, an initial value having a low value (for example, an initial value resulting in excessively high energy or an initial value whose Hamming distance from the optimal solution is too large) is obtained. For example, in a problem of selecting items such as a knapsack problem, the number of state variables whose value is 1 in a state finally selected as the optimal solution makes up only a small part of all state variables in many cases. When the method of randomly changing an initial value is employed, the values of about half of all state variables are 1. For this reason, an initial value whose Hamming distance from the optimal solution is too large is likely to be obtained. Because such an initial value greatly violates the constraint to be satisfied by a knapsack problem, it also results in large energy.

Accordingly, it is difficult to transition from an initial value obtained by the method of randomly changing an initial value to the optimal solution, and there has been a problem in which calculation time increases.

According to one aspect, the present disclosure aims to provide a program, a data processing method, and a data processing apparatus that may shorten calculation time of a discrete optimization problem.

[Solution to Problem]

According to one embodiment, a program in which a computer performs processing of: reading, from a storage unit(memory) that stores a plurality of first solutions of an optimization problem represented by a combination of values of a plurality of state variables included in an Ising-type evaluation function, the plurality of first solutions; first converting the plurality of first solutions into a plurality of second solutions represented by a first number of variables smaller than a number of the plurality of state variables by executing principal component analysis on the plurality of first solutions; determining a region that indicates a spread of the plurality of second solutions in a solution space that includes a dimension of the first number; generating a third solution located at a second position outside the region and away from a first position within the region by a first distance; second converting the third solution into a fourth solution that consists of the plurality of state variables; and searching for a solution of the optimization problem by using the fourth solution as an initial value of the plurality of state variables.

Further, according to one embodiment, a data processing method is provided.

Further, according to one embodiment, a dara processing apparatus is provided.

[Effects of Invention]

According to one aspect, the present disclosure may shorten calculation time of a discrete optimization problem.

[Brief Description of Drawings]

FIG. 1 is a diagram illustrating an example of a data processing apparatus and a data processing method according to a first embodiment;

FIG. 2 is a block diagram illustrating an example of hardware of a data processing apparatus according to a second embodiment;

FIG. 3 is a block diagram illustrating an example of the function of the data processing apparatus;

FIG. 4 is a diagram illustrating an example of a knapsack problem;

FIG. 5 is a diagram illustrating an example of a plurality of solutions of a knapsack problem;

FIG. 6 is a diagram illustrating an example in which the values of solutions are randomly changed;

FIG. 7 is a diagram illustrating an example of a result of converting solutions by PCA;

FIG. 8 is a diagram illustrating an example of a region indicating the spread of four solutions after conversion in a solution space;

FIG. 9 is a diagram illustrating an example of a new solution generated in the solution space of PCA;

FIG. 10 is a diagram illustrating an example of processing of converting a solution generated in the solution space of PCA into an original dimension;

FIG. 11 is a flowchart illustrating an example of a flow of the data processing method; and

FIG. 12 is a diagram illustrating an example of a data processing apparatus according to a third embodiment.

[Description of embodiments]

Hereinafter, the embodiments of the present disclosure will be described with reference to the drawings.

(First Embodiment)

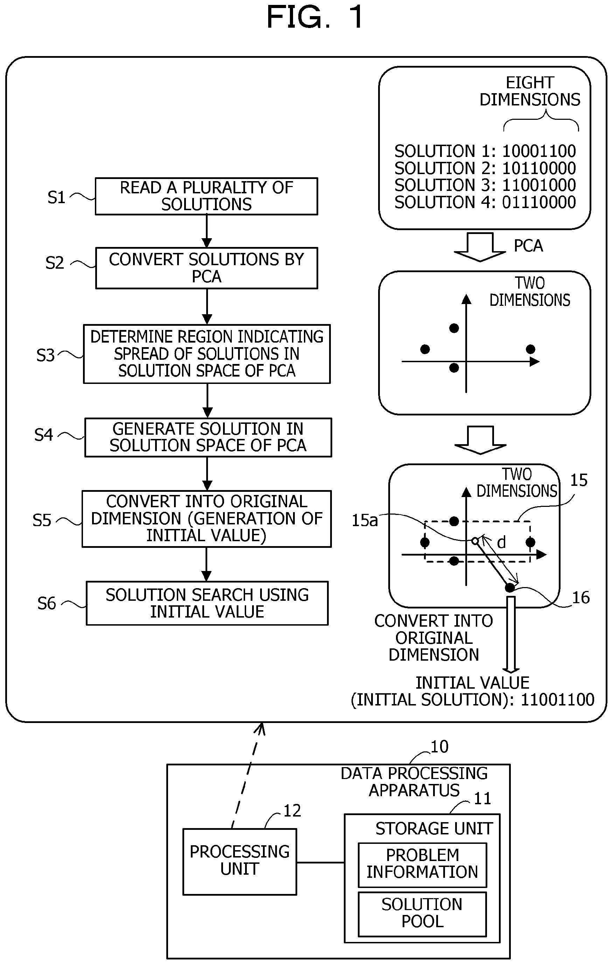

FIG. 1 is a diagram illustrating an example of a data processing apparatus and a data processing method according to the first embodiment.

A data processing apparatus 10 according to the first embodiment includes a storage unit 11 and a processing unit 12.

For example, the storage unit 11 is a volatile storage device that is an electronic circuit such as a dynamic random-access memory (DRAM) or a non-volatile storage device that is an electronic circuit such as a hard disk drive (HDD) or a flash memory. The storage unit 11 may include an electronic circuit such as a register.

The storage unit 11 stores problem information of a discrete optimization problem to be calculated, and a plurality of solutions (solution pool) obtained by previous solution searches performed for the discrete optimization problem.

The problem information includes the weight value ($W_{ij}$) and the bias coefficient ($b_i$) given in equation (1), and/or the like.

For example, each of the plurality of solutions is a solution obtained when a predetermined end condition for a solution search is satisfied. In a situation where the initial value is not appropriately set, there is a high possibility that this solution is a local solution that is not the optimal solution.

Note, the storage unit 11 may store various types of data such as calculation conditions under which the processing unit 12 executes the data processing method to be described later. For example, the calculation conditions include a condition for PCA, distance d to be described later, a calculation condition for a search method such as the simulated annealing method or the replica exchange method, an end condition for calculation, and/or the like. When the processing unit 12 executes a part or all of processing of the data processing method to be described later by software, a program for executing the processing is stored in the storage unit 11.

For example, the processing unit 12 may be realized by a processor that is hardware such as a central processing unit (CPU), a graphics processing unit (GPU), or a digital signal processor (DSP). The processing unit 12 may be realized by an electronic circuit such as an application-specific integrated circuit (ASIC) or a field-programmable gate array (FPGA), or may be realized by a combination of a processor and such electronic circuit.

The processing unit 12 calculates the initial value of $x_0$ to $x_{n-1}$ (n is the total number of state variables included in the Ising-type evaluation function of equation (1)) based on a plurality of solutions of a discrete optimization problem obtained so far, and performs a solution search using the initial value.

For example, the processing unit 12 searches for a state in which the value of the evaluation function represented by equation (1) (energy) is local minimum. A state in which the value of an evaluation function is the minimum value among local minimum values, is the optimal solution. By changing the sign of the evaluation function represented by equation (1), the processing unit 12 may also search for a state in which the value of the evaluation function is local maximum (in this case, a state in which the value of the evaluation function is the maximum value is the optimal solution).

FIG. 1 illustrates an example of a part of a flow of processing performed by the processing unit 12.

The processing unit 12 reads, from the storage unit 11, a plurality of solutions of a discrete optimization problem obtained so far (step S1).

FIG. 1 illustrates an example in which four solutions of solution 1 to solution 4 are read. In the example of FIG. 1, the total number of state variables is eight (n = 8).

The processing unit 12 executes PCA on the plurality of read solutions, and converts the plurality of solutions into a plurality of solutions represented by the number of variables smaller than the above total number of state variables (step S2).

In PCA, such conversion may be referred to as dimension compression (or reduction). In the example of FIG. 1, it may be said that the dimension of the solutions before the conversion is eight. In the example of FIG. 1, it may be said that the dimension after conversion is two, and dimension compression is performed from eight to two.

When dimension compression is performed by PCA, the solution space maintains the properties of the solution space before the compression. When dimension compression is performed as described above, it is possible to express the Euclidean distance between the solutions in the solution space of the compressed dimension. A specific procedure of PCA will be described in a second embodiment.

The processing unit 12 determines a region indicating the spread of the plurality of solutions after conversion in the solution space (step S3). In the example of FIG. 1, a rectangular region 15 determined based on the positions of the four solutions in the solution space, is indicated. For example, this region 15 indicates the spatial spread of the local solutions obtained so far.

The processing unit 12 generates a solution located at a position outside the determined region and away from a certain position within the region by distance d (step S4). For example, distance d may be input by a user from the outside of the data processing apparatus 10 or may be stored in the storage unit 11 in advance.

In the example of FIG. 1, a solution 16 is generated at a position away from a center point 15a of the region 15 by distance d. For example, the solution 16 is generated at a position randomly selected from among positions away from the center point 15a by distance d.

The processing unit 12 generates an initial value (initial solution) for a solution search by converting the solution generated in the solution space of PCA into a solution of the original dimension (solution consisting of n state variables) (step S5).

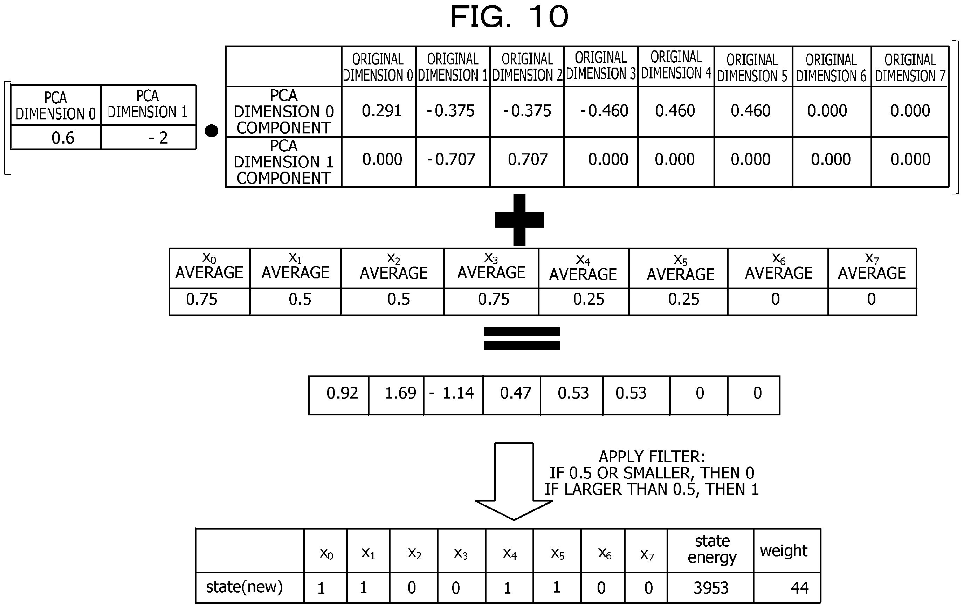

In the example of FIG. 1, the solution 16 in two dimensions is converted into a value in eight dimensions (value represented by eight state variables). A procedure for converting the compressed dimension into the original dimension will be described later (see FIG. 10).

After that, the processing unit 12 performs a solution search by using the generated initial value (step S6).

For example, the solution search is performed by using the simulated annealing method, the replica exchange method, or the like. Solution searches may be performed in parallel by a plurality of types of search methods. An example of the solution search will be described later.

As described above, the data processing apparatus 10 according to the first embodiment converts each of the plurality of solutions obtained so far into a solution of a lower dimension by PCA, converts the dimension of a solution, which is located at a position outside a region indicating a spatial spread of solutions and away from a position within the region by distance d, back into the original dimension, and obtains a new initial value for a solution search. Accordingly, since the degree to which the new initial value is away from the plurality of solutions obtained so far is determined by distance d, an initial value whose Hamming distance from the plurality of solutions obtained so far is not too large is obtained. For example, generation of a low-value initial value is suppressed. For example, as compared with a case where an initial value is simply randomly determined or changed, an initial value having a high value (for example, an initial value resulting in relatively low energy or an initial value whose Hamming distance from the optimal solution is relatively small) is obtained.

By performing a solution search using such initial value, transition from an initial value to the optimal solution is facilitated, and calculation time may be shortened.

After the processing of step S6, the processing unit 12 may repeat the processing of steps S1 to S6 after updating one solution in the solution pool using the solution obtained by the solution search. For example, in a case where a newly obtained solution is a solution better than the worst solution (for example, a solution resulting in the lowest energy) among the solutions included in the solution pool, the processing unit 12 updates the worst solution with the newly obtained solution. This increases the possibility of obtaining a better solution (optimal solution or solution close to the optimal solution).

Further, when the newly obtained solution is better than any of the solutions in the solution pool, the processing unit 12 may output the solution.

(Second Embodiment)

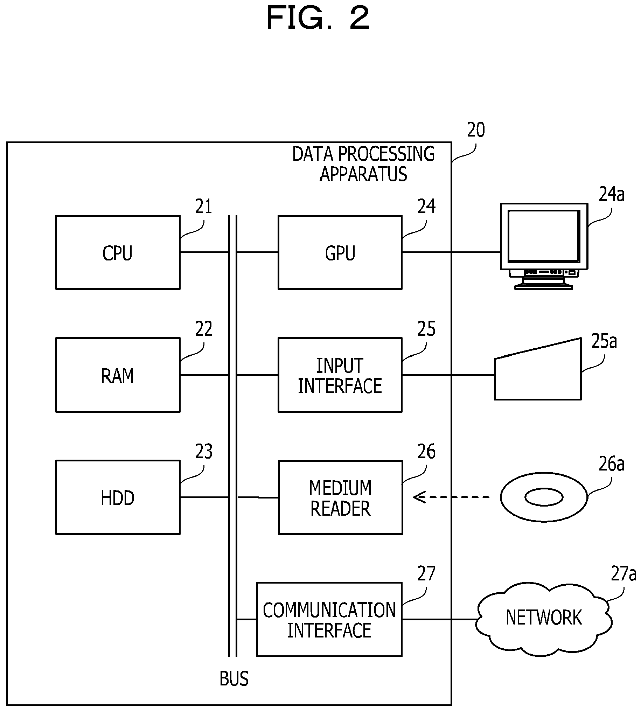

FIG. 2 is a block diagram illustrating an example of hardware of a data processing apparatus according to the second embodiment.

For example, a data processing apparatus 20 is a computer, and includes a CPU 21, a random-access memory (RAM) 22, an HDD 23, a GPU 24, an input interface 25, a medium reader 26, and a communication interface 27. The above units are coupled to a bus.

The CPU 21 is a processor including an arithmetic circuit that executes program instructions. The CPU 21 loads at least a part of a program and data stored in the HDD 23 into the RAM 22, and executes the program. The CPU 21 may include a plurality of processor cores, the data processing apparatus 20 may include a plurality of processors, and the processing to be described below may be executed in parallel by using the plurality of processors or processor cores. A set of a plurality of processors (multiprocessor) may be referred to as a "processor".

The RAM 22 is a volatile semiconductor memory that temporarily stores a program executed by the CPU 21 or data used for computation by the CPU 21. The data processing apparatus 20 may include a memory of a type other than the RAM 22, and may include a plurality of memories.

The HDD 23 is a non-volatile storage device that stores a program of software such as an operating system (OS), middleware, and application software, and data. For example, the program includes a program for causing the data processing apparatus 20 to execute processing of searching for a solution of a discrete optimization problem. The data processing apparatus 20 may include another type of storage device such as a flash memory or a solid-state drive (SSD), and may include a plurality of non-volatile storage devices.

The GPU 24 outputs an image to a display 24a coupled to the data processing apparatus 20 in accordance with an instruction from the CPU 21. As the display 24a, a cathode ray tube (CRT) display, a liquid crystal display (LCD), a plasma display panel (PDP), an organic electro-luminescence (OEL) display, or the like may be used.

The input interface 25 acquires an input signal from an input device 25a coupled to the data processing apparatus 20 and outputs the input signal to the CPU 21. As the input device 25a, a pointing device such as a mouse, a touch panel, a touchpad, or a trackball, a keyboard, a remote controller, a button switch, or the like may be used. A plurality of types of input devices may be coupled to the data processing apparatus 20.

The medium reader 26 is a reading device that reads a program or data recorded on a recording medium 26a. As the recording medium 26a, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a Digital Versatile Disc (DVD).

For example, the medium reader 26 copies a program or data read from the recording medium 26a to another recording medium such as the RAM 22 or the HDD 23. For example, the read program is executed by the CPU 21. The recording medium 26a may be a portable type recording medium, and may be used to distribute a program or data. The recording medium 26a and the HDD 23 may be referred to as a computer-readable recording medium.

The communication interface 27 is an interface that is connected to a network 27a and that performs communication with another information processing apparatus via the network 27a. The communication interface 27 may be a wired communication interface connected to a communication device such as a switch via a cable, or may be a wireless communication interface connected to a base station via a wireless link.

Next, the function and processing procedure of the data processing apparatus 20 will be described.

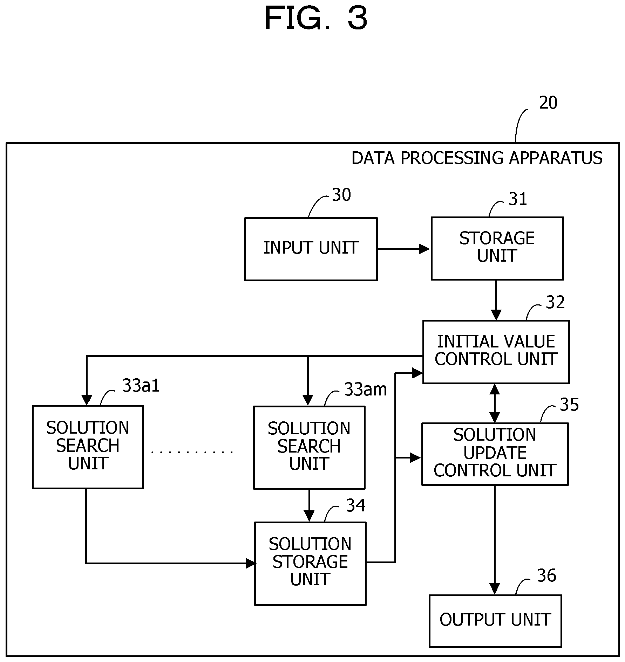

FIG. 3 is a block diagram illustrating an example of the function of the data processing apparatus.

The data processing apparatus 20 includes an input unit 30, a storage unit 31, an initial value control unit 32, solution search units 33a1 to 33am, a solution storage unit 34, a solution update control unit 35, and an output unit 36.

For example, the input unit 30, the initial value control unit 32, the solution search units 33a1 to 33am, the solution update control unit 35, and the output unit 36 may be implemented by using a program module executed by the CPU 21. For example, the storage unit 31 and the solution storage unit 34 may be implemented by using a storage area secured in the RAM 22 or the HDD 23.

For example, the input unit 30 receives input of the initial value of state variables ($x_0$ to $x_{n-1}$), problem information, and calculation conditions. For example, the problem information includes the weight value ($W_{ij}$) and the bias coefficient ($b_i$) given in equation (1). For example, the calculation conditions include a condition for PCA and a distance for generating a new solution in the solution space of PCA. For example, the calculation conditions include the number of replicas, the replica exchange cycle, and the value of temperature parameter set for each replica in a case of using the replica exchange method, the temperature parameter change schedule in a case of using the simulated annealing method, an end condition for calculation, and the like.

These pieces of information may be input by a user operating the input device 25a, or may be input via the recording medium 26a or the network 27a.

The storage unit 31 stores the input initial value of state variables, problem information, and calculation conditions.

The initial value control unit 32 sets the stored initial value of state variables, problem information, and calculation conditions in the solution search units 33a1 to 33am. The initial value control unit 32 calculates a new initial value by PCA from a plurality of solutions stored in the solution storage unit 34, and sets the new initial value in the solution search units 33a1 to 33am.

The solution search units 33a1 to 33am have the function of a neighborhood solver that searches for a solution by a neighborhood search (local search). As methods of the neighborhood search, there are the simulated annealing method, the replica exchange method, and the like.

The solution storage unit 34 stores a plurality of solutions (solution pool) obtained by the solution search units 33a1 to 33am.

The solution update control unit 35 performs update of the solution pool based on a plurality of solutions obtained by the solution search units 33a1 to 33am.

For example, the output unit 36 outputs a calculation result including the best solution (a solution with which the value of the evaluation function represented by equation (1) is the minimum in the solution searches performed so far). For example, the output unit 36 may output and display the calculation result on the display 24a, may transmit the calculation result to another information processing apparatus via the network 27a, or may store the calculation result in an external storage device.

Next, an example of calculation of a discrete optimization problem by the data processing apparatus 20 will be described.

Hereinafter, description will be given with a case where a knapsack problem which is one of discrete optimization problems is calculated as an example.

A knapsack problem is a problem in which, when one knapsack with capacity C and n types of items (the value of each item is $p_i$ and the volume of each item is $c_i$) are given, items to be packed in the knapsack are selected such that the sum of the values of the items packed in a range not exceeding the capacity C is maximized.

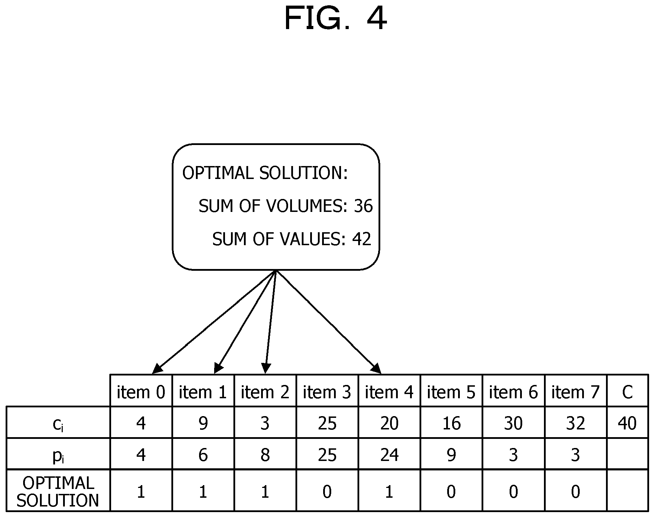

FIG. 4 is a diagram illustrating an example of a knapsack problem. FIG. 4 illustrates an example of a knapsack problem for which the optimal solution is known.

In the example of a knapsack problem in FIG. 4, capacity C of a knapsack is 40, and the number of types of items (n) is eight (item 0 to item 7). The value $p_i$ and the volume $c_i$ of each item are given as in FIG. 4.

A solution is represented by a combination of state variables of 0 or 1 each indicating whether an item is included in a knapsack. 0 indicates that the item is not included in the knapsack, and 1 indicates that the item is included in the knapsack.

In the example of a knapsack problem in FIG. 4, selecting four types of items (item 0, item 1, item 2, and item 4) as items to be packed in the knapsack is the optimal solution. In this case, the sum of the volumes is 36 and the sum of the values is 42.

When searching for the optimal solution of a knapsack problem such as that described above by a neighborhood search, there may be cases in which the obtained solution is constrained to a local solution that is not the optimal solution.

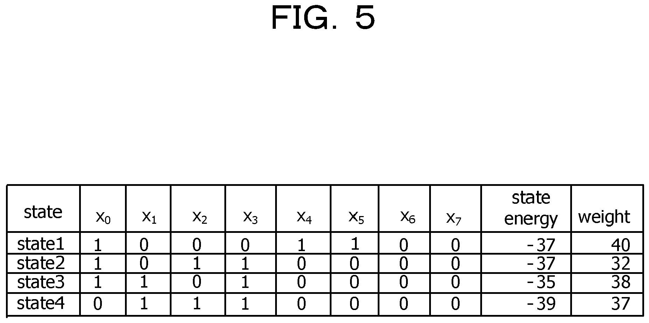

FIG. 5 is a diagram illustrating an example of a plurality of solutions of a knapsack problem.

In FIG. 5, state variables indicating whether the eight types of items illustrated in FIG. 4 (item 0 to item 7) are included in the knapsack, are represented by $x_0$ to $x_7$ each having a value of 0 or 1. A combination of the values of $x_0$ to $x_7$ is a solution (illustrated as "state 1" to "state 4"). "state energy" is the value of an Ising-type evaluation function representing a knapsack problem such as that described above (energy). "weight" is the sum of the volumes of items packed in a knapsack.

When the above-described optimal solution illustrated in FIG. 4 is represented by a combination of the values of $x_0$ to $x_7$, $(x_0, x_1, x_2, x_3, x_4, x_5, x_6, x_7) = (1, 1, 1, 0, 1, 0, 0, 0)$. In the example of FIG. 5, none of the four solutions is the optimal solution. In a case where only solutions such as those illustrated in FIG. 5 are obtained even when a neighborhood search is repeated many times, there is a possibility that a solution is constrained to a local solution other than the optimal solution.

In such a case, a possible option is to randomly change the values of solutions other than the best solution among a plurality of solutions such as those illustrated in FIG. 5 and repeat the neighborhood search using the solution after the change as the initial value of $x_0$ to $x_7$ (initial solution), so that a solution escapes from a local solution.

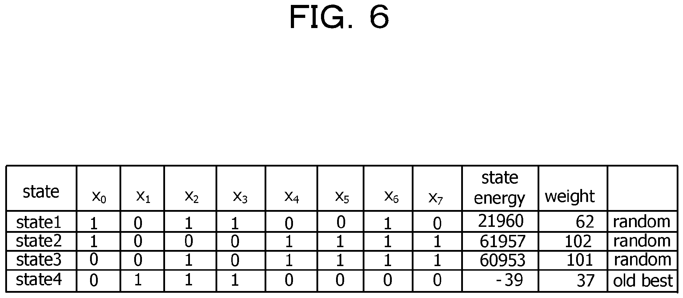

FIG. 6 is a diagram illustrating an example in which the values of solutions are randomly changed.

FIG. 6 illustrates an example in which the values of solutions other than "state 4", which results in the smallest energy (which is the best solution in the table), are randomly changed.

For each solution whose value is randomly changed, "weight" greatly exceeds 40, which is the capacity C of the knapsack, and the energy is very large. In a case where a solution resulting in large energy is used as an initial value for a solution search, it is difficult to transition the solution to the optimal solution, and calculation time increases.

Accordingly, for example, in the data processing apparatus 20 according to the second embodiment, the initial value control unit 32 calculates an initial value as follows.

First, the initial value control unit 32 normalizes a plurality of (n-dimensional) solutions stored in the solution storage unit 34 and each consisting of n state variables, and calculates a variance-covariance matrix of the plurality of normalized solutions. The initial value control unit 32 obtains n PCA components by performing eigenvalue decomposition on the variance-covariance matrix. The initial value control unit 32 rearranges the components according to the degree of contribution (also referred to as the rate of contribution or the like) to the standard deviation of data, and converts the components into a plurality of solutions represented by a smaller number of variables than n selected in descending order of the degree of contribution.

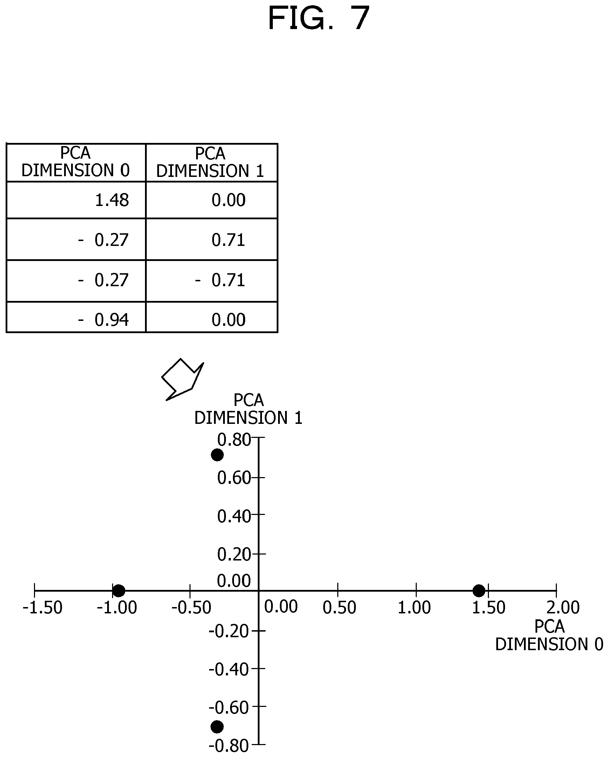

FIG. 7 is a diagram illustrating an example of a result of converting solutions by PCA.

FIG. 7 illustrates an example in which the four solutions illustrated in FIG. 5 are arranged in the two dimensional solution space of PCA with two variables (PCA dimension 0 and PCA dimension 1). For example, the four solutions with n = 8 illustrated in FIG. 5 are converted into four solutions represented by two variables. In this way, by performing PCA, dimension compression may be performed.

Next, the initial value control unit 32 determines a region indicating the spread of the plurality of solutions after conversion in the solution space.

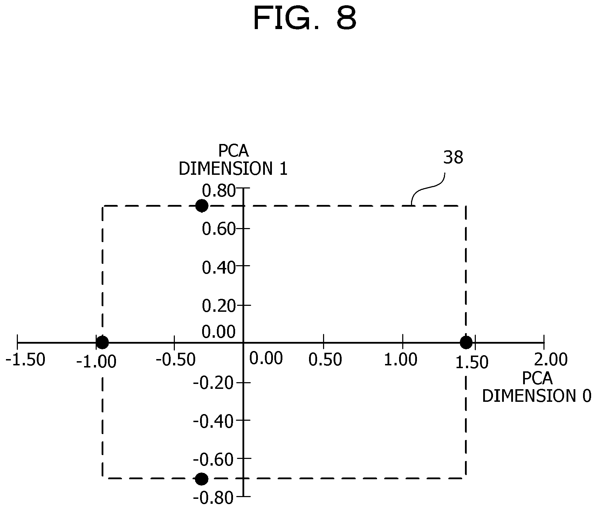

FIG. 8 is a diagram illustrating an example of a region indicating the spread of the four solutions after conversion in the solution space.

In the example of FIG. 8, a rectangular region 38 defined by the positions of the four solutions in the solution space, is determined. Any one of the four solutions is located on each side of the region 38. The shape of a region indicating the spread of a plurality of solutions in the solution space is not limited to a rectangle, and may be a polygon, an ellipse, or the like.

After that, based on distance d for generating a new solution in the solution space of PCA, the initial value control unit 32 generates a solution located at a position outside the determined region and away from a certain position within the region by distance d.

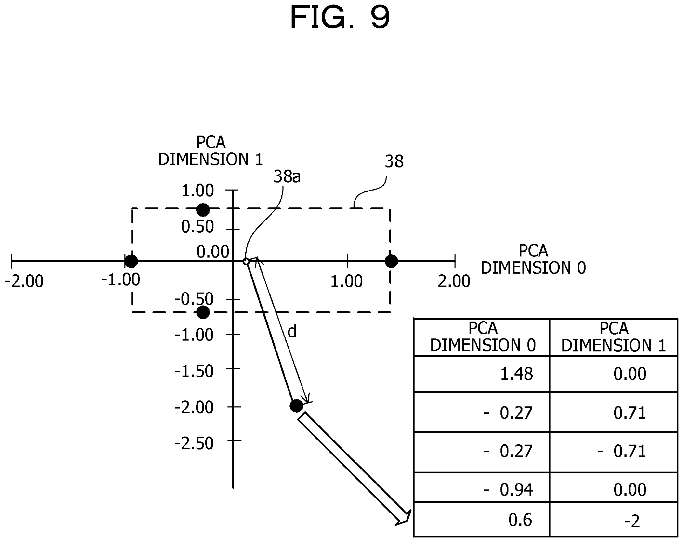

FIG. 9 is a diagram illustrating an example of a new solution generated in the solution space of PCA.

In the example of FIG. 9, a new solution is generated at a position away from a center point 38a of the region 38 by distance d ($\approx$ 2). For example, a new solution is generated at a position randomly selected from among positions away from the center point 38a by distance d.

After that, the initial value control unit 32 generates the initial value of n state variables (initial solution) by converting the solution generated in the solution space of PCA into the original dimension.

FIG. 10 is a diagram illustrating an example of processing of converting a solution generated in the solution space of PCA into an original dimension.

The solution generated in the solution space of PCA illustrated in FIG. 9 may be represented by a matrix of one row and two columns. The initial value control unit 32 multiplies this matrix by a matrix represented in a two row and eight column format such as that illustrated in FIG. 10 to be used for inverse conversion to the original dimension (eight dimensions).

The initial value control unit 32 adds, to each of the obtained values corresponding to the original dimension, the average value in the four solutions of the state variable corresponding to each dimension among $x_0$ to $x_7$ illustrated in FIG. 5. For example, 0.75, which is the average value of $x_0$ corresponding to dimension 0, is added to the value corresponding to dimension 0 obtained by the above multiplication.

After that, the initial value control unit 32 applies, to the values corresponding to the eight dimensions obtained by the above addition, a filter that sets 0 when the value is equal to or smaller than 0.5 and sets 1 when the value is larger than 0.5. Thus, a new solution consisting of $x_0$ to $x_7$ ("state (new)") is obtained.

When the above new solution is used, energy is 3953, and the sum of the volumes of items included in a knapsack is 44. This energy is lower than the energy obtained by the solutions illustrated in FIG. 6 in which the values are randomly changed.

Accordingly, there is a high possibility that the solution obtained by the above method is not a solution too far away from the optimal solution, and it is possible to suppress an increase in time for convergence to the optimal solution. This may shorten calculation time of a discrete optimization problem.

Although an example in which eight dimensions is converted into two dimensions is described above, this is not the only case. It may be changed to three dimensions or more number of dimensions depending on the discrete optimization problem to be calculated. It goes without saying that the method of the present embodiment may be applied to a problem in which the number (n) of state variables is larger than eight (large-scale discrete optimization problem).

Hereinafter, the processing procedure (data processing method) of the data processing apparatus 20 will be described. An example in which a search is performed by using the replica exchange method will be described below.

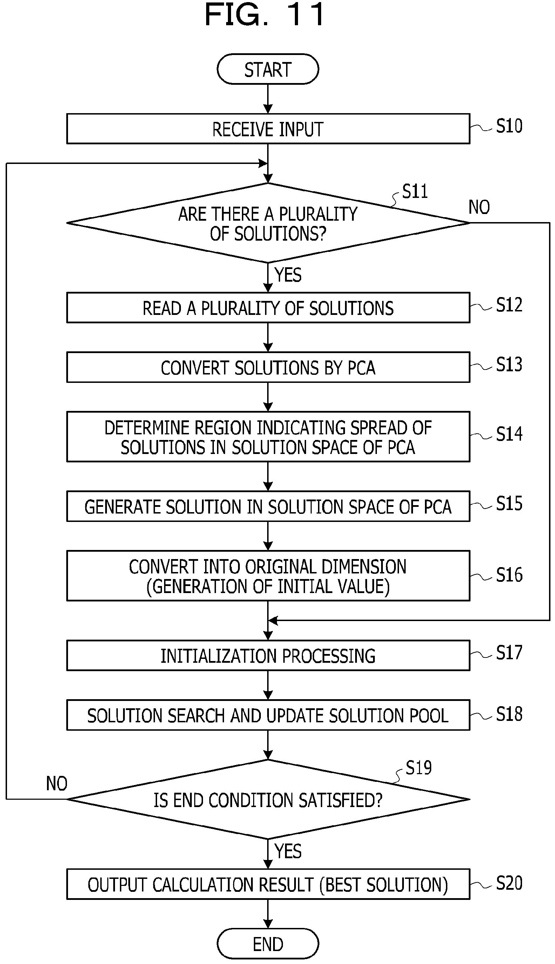

FIG. 11 is a flowchart illustrating an example of a flow of the data processing method.

The input unit 30 receives input of the initial value of $x_0$ to $x_{n-1}$, and the problem information and calculation conditions described above (step S10). For example, these pieces of input information are stored in the storage unit 31.

The initial value control unit 32 determines whether or not there are a plurality of solutions in the solution storage unit 34 (step S11). When it is determined that there are a plurality of solutions in the solution storage unit 34, the initial value control unit 32 performs the processing of step S12. When it is determined that there are no plurality of solutions in the solution storage unit 34, the initial value control unit 32 performs the processing of step S17. At a time point when the solution search units 33a1 to 33am have not yet performed a solution search, since there are no plurality of solutions in the solution storage unit 34, the processing of step S17 is performed.

For example, when a plurality of solutions are obtained as a result of the solution search by the solution search units 33a1 to 33am, the processing of step S12 is performed.

In the processing of step S12, the initial value control unit 32 reads a plurality of solutions stored in the solution storage unit 34. For example, as illustrated in FIG. 7, the initial value control unit 32 executes PCA on the plurality of read solutions, and converts the plurality of solutions into a plurality of solutions of a dimension lower than the dimension of the plurality of solutions (step S13).

After that, for example, as illustrated in FIG. 8, the initial value control unit 32 determines a region indicating the spread of the plurality of solutions after conversion in the solution space (step S14).

For example, as illustrated in FIG. 9, the initial value control unit 32 generates a solution located at a position outside the determined region and away from a certain position within the region by distance d (step S15).

After that, for example, as illustrated in FIG. 10, the initial value control unit 32 generates the initial value of n state variables (initial solution) by converting the solution generated in the solution space of PCA into the solution of the original dimension (step S16).

After the processing of step S16 or when the initial value control unit 32 determines, in the processing of step S11, that there are no plurality of solutions in the solution storage unit 34, the initial value control unit 32 performs initialization processing on the solution search units 33a1 to 33am (step S17). For example, the initialization processing includes setting of the initial value of $x_0$ to $x_{n-1}$, setting of the initial value of energy based on the initial value of $x_0$ to $x_{n-1}$, setting of calculation conditions, and the like, in the solution search units 33a1 to 33am.

After that, solution search by the solution search units 33a1 to 33am and update of the solution pool by the solution update control unit 35 are performed (step S18).

For example, a solution search is performed as follows.

For example, the solution search units 33a1 to 33am first select, from among $x_0$ to $x_{n-1}$, a state variable whose value may be changed (hereinafter referred to as a state variable of a flip candidate). For example, the solution search units 33a1 to 33am select a state variable of a flip candidate at random or in a predetermined order.

The solution search units 33a1 to 33am calculate, based on equation (2), a change amount ($\Delta E$) of the value of an evaluation function assuming that the value of the selected state variable changes, and determine whether to allow the change in the value of the state variable of a flip candidate (whether flipping may be performed) based on a result of comparison between $\Delta E$ and a predetermined value. Hereinafter, such determination processing is referred to as flip determination processing.

For example, the predetermined value is a noise value obtained based on a random number and a value of temperature parameter. For example, when $\Delta E$ is smaller than $\log(\text{rand}) \times T$, which is an example of a noise value obtained based on a uniform random number (rand) equal to or larger than 0 and equal to or smaller than 1 and a temperature parameter (T), the solution search units 33a1 to 33am determine that the change in the value of the state variable of a flip candidate is allowed.

When it is determined that flipping may not be performed, the solution search units 33a1 to 33am repeat the processing from the processing of selecting a state variable of a flip candidate. When it is determined that flipping may be performed, the solution search units 33a1 to 33am update the solution consisting of $x_0$ to $x_{n-1}$ by changing the value of the state variable of a flip candidate.

The solution search units 33a1 to 33am repeat the above processing until a predetermined end condition is satisfied.

For example, in a case where the simulated annealing method is used, every time flip determination processing is repeated a predetermined number of times, the solution search units 33a1 to 33am reduce the value of the above-mentioned temperature parameter (T) in accordance with a predetermined temperature parameter change schedule. The solution search units 33a1 to 33am store, in the solution storage unit 34, a state obtained when flip determination processing is repeated a predetermined number of times, as a solution. Every time a change in the value of a state variable occurs, the solution search units 33a1 to 33am may update the value of the evaluation function represented by equation (1) (energy), and hold the energy and the state obtained when the energy is the minimum energy up to that time. In this case, the solution search units 33a1 to 33am may store, in the solution storage unit 34, a state corresponding to the minimum energy stored after flip determination processing is repeated a predetermined number of times, as a solution.

In a case where the replica exchange method is used, the solution search units 33a1 to 33am perform the above selection of a state variable of a flip candidate, calculation of $\Delta E$, flip determination processing, and processing of changing the value of the state variable of a flip candidate, in each of a plurality of replicas in which different values of temperature parameters are set. The solution search units 33a1 to 33am perform replica exchange every time flip determination processing is repeated a predetermined number of times. For example, the solution search units 33a1 to 33am randomly select two replicas from among a plurality of replicas, and exchange the values of temperature parameters or states between the two selected replicas with a predetermined exchange probability based on an energy difference between the replicas or a difference in the values of temperature parameters between the replicas. For example, every time a change in the value of a state variable occurs in each replica, the solution search units 33a1 to 33am update the value of the evaluation function represented by equation (1) (energy), and hold the energy and the state obtained when the energy is the minimum energy up to that time. The solution search units 33a1 to 33am store, in the solution storage unit 34, a state corresponding to the minimum energy in all replicas among the minimum energies stored after the above flip determination processing is repeated a predetermined number of times in each replica, as a solution.

For example, update of the solution pool by the solution update control unit 35 is performed as follows.

The solution update control unit 35 determines whether or not a solution obtained by the solution search units 33a1 to 33am is a solution better than the worst solution among the plurality of solutions included in the solution storage unit 34 (for example, a solution resulting in low energy). When it is determined that the solution is a solution better than the worst solution, the solution update control unit 35 updates the worst solution with the solution.

After the processing of step S18, the solution update control unit 35 determines whether or not a predetermined end condition is satisfied (step S19). For example, when the best solution does not change even when the processing of steps S11 to step S18 is repeated a predetermined number of times, the solution update control unit 35 may determine that the end condition is satisfied.

When it is determined that the predetermined end condition is not satisfied, the solution update control unit 35 repeats the processing from step S11.

By contrast, when it is determined that the predetermined end condition is satisfied, the solution update control unit 35 causes the output unit 36 to output the best solution as a calculation result of a discrete optimization problem (step S20). This ends the processing by the data processing apparatus 20.

According to the data processing apparatus 20 that performs data processing as described above, calculation time of a discrete optimization problem may be shortened for the above-described reason by performing a solution search using the initial value of $x_0$ to $x_{n-1}$ generated through the processing of steps S12 to S16.

As described above, the above details of processing may be achieved by causing the data processing apparatus 20 to execute a program.

The program may be recorded in a computer-readable recording medium (for example, the recording medium 26a). As the recording medium, for example, a magnetic disk, an optical disk, an MO disk, a semiconductor memory, or the like may be used. The magnetic disk includes an FD and an HDD. The optical disk includes a CD, a CD-recordable (R)/rewritable (RW), a DVD, and a DVD-R/RW. The program may be recorded in a portable type recording medium and distributed. In this case, the program may be copied from the portable type recording medium to another recording medium (for example, the HDD 23) and executed.

(Third Embodiment)

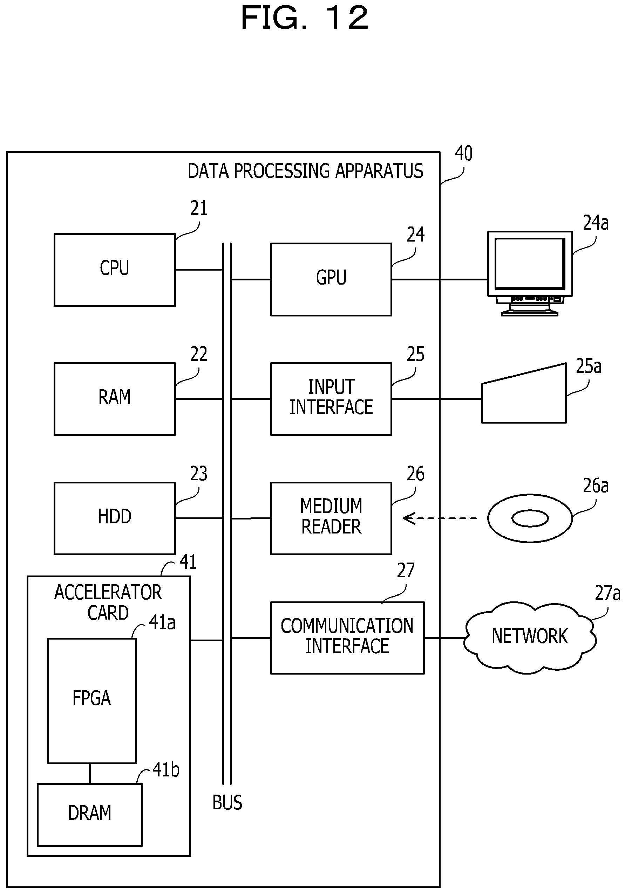

FIG. 12 is a diagram illustrating an example of a data processing apparatus according to the third embodiment. In FIG. 12, the same elements as the elements illustrated in FIG. 2 are assigned with the same reference signs.

A data processing apparatus 40 according to the third embodiment includes an accelerator card 41 coupled to a bus.

The accelerator card 41 is a hardware accelerator that searches for a solution of a discrete optimization problem. The accelerator card 41 includes an FPGA 41a and a DRAM 41b.

For example, in the data processing apparatus 40 according to the third embodiment, the FPGA 41a performs the processing of the solution search units 33a1 to 33am illustrated in FIG. 3. The DRAM 41b may function as the storage unit 31 illustrated in FIG. 3 that stores problem information such as the weight value ($W_{ij}$) and the bias coefficient ($b_i$) given in Formula (1), or may function as the solution storage unit 34 illustrated in FIG. 3 that stores a plurality of solutions. Although the processing of the initial value control unit 32 and the solution update control unit 35 in FIG. 3 may be performed by the CPU 21, the FPGA 41a may perform the processing instead.

There may be a plurality of accelerator cards 41. In this case, for example, the processing of the solution search units 33a1 to 33am may be performed in parallel.

The data processing apparatus 40 having the above hardware structure may perform processing similar to that performed by the data processing apparatus 20 according to the second embodiment, and similar effect may be obtained.

Although an aspect of the program, the data processing method, and the data processing apparatus of the present disclosure has been described above based on the embodiments, these are merely examples and the present disclosure is not limited to the above description.

**Claims**

1. A program in which a computer performs processing of:

   reading, from a storage unit(memory) that stores a plurality of first solutions of an optimization problem represented by a combination of values of a plurality of state variables included in an Ising-type evaluation function, the plurality of first solutions;
   first converting the plurality of first solutions into a plurality of second solutions represented by a first number of variables smaller than a number of the plurality of state variables by executing principal component analysis on the plurality of first solutions;
   determining a region that indicates a spread of the plurality of second solutions in a solution space that includes a dimension of the first number;
   generating a third solution located at a second position outside the region and away from a first position within the region by a first distance;
   second converting the third solution into a fourth solution that consists of the plurality of state variables; and
   searching for a solution of the optimization problem by using the fourth solution as an initial value of the plurality of state variables.

2. The program according to claim 1, further comprising

   updating one of the plurality of first solutions by a fifth solution of the optimization problem obtained by the searching that uses the fourth solution as the initial value, and
   repeating the reading, the first converting, the determining, the generating, the second converting, and the searching.

3. The program according to claim 1 or 2, wherein

   the region is determined based on positions of the plurality of second solutions in the solution space, and
   the first position is a center point of the region.

4. The program according to any one of claims 1 to 3,
   wherein the second position away from the first position by the first distance is randomly determined in the solution space.

5. A data processing method comprising:

   reading, from a storage unit(memory) that stores a plurality of first solutions of an optimization problem represented by a combination of values of a plurality of state variables included in an Ising-type evaluation function, the plurality of first solutions;
   converting the plurality of first solutions into a plurality of second solutions represented by a first number of variables smaller than a number of the plurality of state variables by executing principal component analysis on the plurality of first solutions;
   determining a region that indicates a spread of the plurality of second solutions in a solution space that includes a dimension of the first number;
   generating a third solution located at a second position outside the region and away from a first position within the region by a first distance;
   converting the third solution into a fourth solution that consists of the plurality of state variables; and
   searching for a solution of the optimization problem by using the fourth solution as an initial value of the plurality of state variables.

6. A data processing apparatus comprising:

   a storage unit configured to store a plurality of first solutions of an optimization problem represented by a combination of values of a plurality of state variables included in an Ising-type evaluation function; and
   a processing unit configured to:

      read, from the storage unit (memory), the plurality of first solutions,
      convert the plurality of first solutions into a plurality of second solutions represented by a first number of variables smaller than a number of the plurality of state variables by executing principal component analysis on the plurality of first solutions;

determine a region that indicates a spread of the plurality of second solutions in a solution space that includes a dimension of the first number;

generate a third solution located at a second position outside the region and away from a first position within the region by a first distance;

convert the third solution into a fourth solution that consists of the plurality of state variables; and

search for a solution of the optimization problem by using the fourth solution as an initial value of the plurality of state variables.

# FIG. 1

EIGHT
DIMENSIONS

SOLUTION 1: 10001100
SOLUTION 2: 10110000
SOLUTION 3: 11001000
SOLUTION 4: 01110000

⬇ PCA

| S1 | READ A PLURALITY OF SOLUTIONS |
| --- | --- |

↓

| S2 | CONVERT SOLUTIONS BY PCA |
| --- | --- |

↓

| S3 | DETERMINE REGION INDICATING SPREAD OF SOLUTIONS IN SOLUTION SPACE OF PCA |
| --- | --- |

↓

| S4 | GENERATE SOLUTION IN SOLUTION SPACE OF PCA |
| --- | --- |

↓

| S5 | CONVERT INTO ORIGINAL DIMENSION (GENERATION OF INITIAL VALUE) |
| --- | --- |

↓

| S6 | SOLUTION SEARCH USING INITIAL VALUE |
| --- | --- |

TWO
DIMENSIONS

⬇

TWO
DIMENSIONS 15

15a

d

16

CONVERT INTO
ORIGINAL
DIMENSION

⬇

INITIAL VALUE
(INITIAL SOLUTION): 11001100

10 DATA PROCESSING APPARATUS

11 STORAGE UNIT

12 PROCESSING UNIT

PROBLEM INFORMATION

SOLUTION POOL

# FIG. 2

DATA PROCESSING APPARATUS — 20

CPU — 21

GPU — 24

24a

RAM — 22

INPUT INTERFACE — 25

25a

HDD — 23

MEDIUM READER — 26

26a

COMMUNICATION INTERFACE — 27

NETWORK — 27a

BUS

# FIG. 3

20

**DATA PROCESSING APPARATUS**

30

INPUT UNIT

31

STORAGE UNIT

32

INITIAL VALUE CONTROL UNIT

33a1

SOLUTION SEARCH UNIT

33am

SOLUTION SEARCH UNIT

. . . . . . . . . .

34

SOLUTION STORAGE UNIT

35

SOLUTION UPDATE CONTROL UNIT

36

OUTPUT UNIT

# FIG. 4

OPTIMAL SOLUTION:

SUM OF VOLUMES: 36

SUM OF VALUES: 42

|  | item 0 | item 1 | item 2 | item 3 | item 4 | item 5 | item 6 | item 7 | C |
|---|---|---|---|---|---|---|---|---|---|
| $c_i$ | 4 | 9 | 3 | 25 | 20 | 16 | 30 | 32 | 40 |
| $p_i$ | 4 | 6 | 8 | 25 | 24 | 9 | 3 | 3 | |
| OPTIMAL SOLUTION | 1 | 1 | 1 | 0 | 1 | 0 | 0 | 0 | |

# FIG. 5

| state | $x_0$ | $x_1$ | $x_2$ | $x_3$ | $x_4$ | $x_5$ | $x_6$ | $x_7$ | state energy | weight |
|---|---|---|---|---|---|---|---|---|---|---|
| state1 | 1 | 0 | 0 | 0 | 1 | 1 | 0 | 0 | -37 | 40 |
| state2 | 1 | 0 | 1 | 1 | 0 | 0 | 0 | 0 | -37 | 32 |
| state3 | 1 | 1 | 0 | 1 | 0 | 0 | 0 | 0 | -35 | 38 |
| state4 | 0 | 1 | 1 | 1 | 0 | 0 | 0 | 0 | -39 | 37 |

# FIG. 6

| state | $x_0$ | $x_1$ | $x_2$ | $x_3$ | $x_4$ | $x_5$ | $x_6$ | $x_7$ | state energy | weight | |
|---|---|---|---|---|---|---|---|---|---|---|---|
| state1 | 1 | 0 | 1 | 1 | 0 | 0 | 1 | 0 | 21960 | 62 | random |
| state2 | 1 | 0 | 0 | 0 | 1 | 1 | 1 | 1 | 61957 | 102 | random |
| state3 | 0 | 0 | 1 | 0 | 1 | 1 | 1 | 1 | 60953 | 101 | random |
| state4 | 0 | 1 | 1 | 1 | 0 | 0 | 0 | 0 | - 39 | 37 | old best |

# FIG. 7

| PCA DIMENSION 0 | PCA DIMENSION 1 |
|---|---|
| 1.48 | 0.00 |
| - 0.27 | 0.71 |
| - 0.27 | - 0.71 |
| - 0.94 | 0.00 |

# FIG. 8

# FIG. 9

PCA
DIMENSION 1

38a

38

| PCA DIMENSION 0 | PCA DIMENSION 1 |
|---|---|
| 1.48 | 0.00 |
| - 0.27 | 0.71 |
| - 0.27 | - 0.71 |
| - 0.94 | 0.00 |
| 0.6 | -2 |

# FIG. 10

| | PCA DIMENSION 0 | PCA DIMENSION 1 |
|---|---|---|
| | 0.6 | - 2 |

●

| | | ORIGINAL DIMENSION 0 | ORIGINAL DIMENSION 1 | ORIGINAL DIMENSION 2 | ORIGINAL DIMENSION 3 | ORIGINAL DIMENSION 4 | ORIGINAL DIMENSION 5 | ORIGINAL DIMENSION 6 | ORIGINAL DIMENSION 7 |
|---|---|---|---|---|---|---|---|---|---|
| PCA DIMENSION 0 COMPONENT | | 0.291 | - 0.375 | - 0.375 | - 0.460 | 0.460 | 0.460 | 0.000 | 0.000 |
| PCA DIMENSION 1 COMPONENT | | 0.000 | - 0.707 | 0.707 | 0.000 | 0.000 | 0.000 | 0.000 | 0.000 |

**+**

| $x_0$ AVERAGE | $x_1$ AVERAGE | $x_2$ AVERAGE | $x_3$ AVERAGE | $x_4$ AVERAGE | $x_5$ AVERAGE | $x_6$ AVERAGE | $x_7$ AVERAGE |
|---|---|---|---|---|---|---|---|
| 0.75 | 0.5 | 0.5 | 0.75 | 0.25 | 0.25 | 0 | 0 |

**=**

| 0.92 | 1.69 | - 1.14 | 0.47 | 0.53 | 0.53 | 0 | 0 |
|---|---|---|---|---|---|---|---|

APPLY FILTER:
IF 0.5 OR SMALLER, THEN 0
IF LARGER THAN 0.5, THEN 1

| | $x_0$ | $x_1$ | $x_2$ | $x_3$ | $x_4$ | $x_5$ | $x_6$ | $x_7$ | state energy | weight |
|---|---|---|---|---|---|---|---|---|---|---|
| state(new) | 1 | 1 | 0 | 0 | 1 | 1 | 0 | 0 | 3953 | 44 |

# FIG. 11

```
                    ┌──────────┐
                    │  START   │
                    └────┬─────┘
                         ↓
         ┌──────────────────────────────────┐
         │         RECEIVE INPUT            │──── S10
         └───────────────┬──────────────────┘
                         ↓
              ╱─────────────────────╲                    S11
             ╱   ARE THERE A PLURALITY ╲───── NO
             ╲    OF SOLUTIONS?       ╱
              ╲─────────────────────╱
                         │ YES
                         ↓
         ┌──────────────────────────────────┐
         │    READ A PLURALITY OF SOLUTIONS │──── S12
         └───────────────┬──────────────────┘
                         ↓
         ┌──────────────────────────────────┐
         │     CONVERT SOLUTIONS BY PCA     │──── S13
         └───────────────┬──────────────────┘
                         ↓
         ┌──────────────────────────────────┐
         │ DETERMINE REGION INDICATING SPREAD OF │──── S14
         │ SOLUTIONS IN SOLUTION SPACE OF PCA    │
         └───────────────┬──────────────────┘
                         ↓
         ┌──────────────────────────────────┐
         │ GENERATE SOLUTION IN SOLUTION SPACE OF PCA │──── S15
         └───────────────┬──────────────────┘
                         ↓
         ┌──────────────────────────────────┐
         │   CONVERT INTO ORIGINAL DIMENSION │──── S16
         │   (GENERATION OF INITIAL VALUE)   │
         └───────────────┬──────────────────┘
                         ↓
         ┌──────────────────────────────────┐
         │    INITIALIZATION PROCESSING     │──── S17
         └───────────────┬──────────────────┘
                         ↓
         ┌──────────────────────────────────┐
         │ SOLUTION SEARCH AND UPDATE SOLUTION POOL │──── S18
         └───────────────┬──────────────────┘
                         ↓
              ╱─────────────────────╲              S19
      NO ────╱ IS END CONDITION SATISFIED? ╲
             ╲─────────────────────╱
                         │ YES
                         ↓
         ┌──────────────────────────────────┐
         │ OUTPUT CALCULATION RESULT (BEST SOLUTION) │──── S20
         └───────────────┬──────────────────┘
                         ↓
                    ┌──────────┐
                    │   END    │
                    └──────────┘
```

# FIG. 12

DATA PROCESSING APPARATUS 40

CPU 21

GPU 24 — 24a

RAM 22

INPUT INTERFACE 25 — 25a

HDD 23

MEDIUM READER 26 — 26a

ACCELERATOR CARD 41

FPGA 41a

DRAM 41b

COMMUNICATION INTERFACE 27 — NETWORK 27a

BUS

Europäisches
Patentamt

European
Patent Office

Office européen
des brevets

# EUROPEAN SEARCH REPORT

**Application Number**

EP 22 17 0237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 135 137 A1 (TOSHIBA KK [JP]; TOSHIBA DIGITAL SOLUTIONS CORP [JP]) 1 October 2020 (2020-10-01) * paragraphs [0006], [0032], [0033]; figures 4,5,18 * ----- | 1-6 | INV. G06N7/00 G06N5/00 |
| A | CA 3 143 493 A1 (TOSHIBA KK [JP]; TOSHIBA DIGITAL SOLUTIONS CORP [JP]) 24 December 2020 (2020-12-24) * paragraph [0024] * ----- | 1-6 | |

**TECHNICAL FIELDS SEARCHED (IPC)**

G06N

The present search report has been drawn up for all claims

| Place of search | Date of completion of the search | Examiner |
|---|---|---|
| The Hague | 18 October 2022 | Falco, Gabriele |

EPO FORM 1503 03.82 (P04C01)

## ANNEX TO THE EUROPEAN SEARCH REPORT
## ON EUROPEAN PATENT APPLICATION NO.

EP 22 17 0237

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2022

| Patent document cited in search report | | Publication date | Patent family member(s) | | Publication date |
|---|---|---|---|---|---|
| CA 3135137 | A1 | 01-10-2020 | CA | 3135137 A1 | 01-10-2020 |
| | | | CN | 113646782 A | 12-11-2021 |
| | | | JP | WO2020196866 A1 | 01-10-2020 |
| | | | US | 2022012307 A1 | 13-01-2022 |
| | | | WO | 2020196866 A1 | 01-10-2020 |
| CA 3143493 | A1 | 24-12-2020 | CA | 3143493 A1 | 24-12-2020 |
| | | | JP | 2020166802 A | 08-10-2020 |
| | | | US | 2022107786 A1 | 07-04-2022 |
| | | | WO | 2020255839 A1 | 24-12-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018141759 A
- JP 2001117773 A

- JP 2019046031 A

**Non-patent literature cited in the description**

- **CHRISTIAN BLUM ; ANDREA ROLI.** Metaheuristics in combinatorial optimization: Overview and conceptual comparison. *ACM Computing Surveys,* September 2003, vol. 35 (3), 268-308